# EUROPÄISCHE PATENTSCHRIFT

(11) **EP 3 939 226 B1**
(45) Veröffentlichungstag und Bekanntmachung des Hinweises auf die Patenterteilung: **18.12.2024**
(21) Anmeldenummer: 20710487.8
(22) Anmeldetag: 09.03.2020
(51) Int. Cl.: G06F 21/44, H04L 9/40

(54) **VERFAHREN ZUM AUTHENTIFIZIEREN EINES COMPUTERSYSTEMS**
METHOD FOR AUTHENTICATING A COMPUTER SYSTEM
PROCÉDÉ D'AUTHENTIFICATION D'UN SYSTÈME INFORMATIQUE

(30) Priorität: 15.03.2019 DE 102019106667
(43) Veröffentlichungstag der Anmeldung: 19.01.2022
(73) Patentinhaber: Bundesdruckerei GmbH, 10969 Berlin (DE)
(72) Erfinder: NGUYEN, Kim, 10437 Berlin (DE); STEINFELDT, Frank, 49492 Westerkappeln (DE); ENTSCHEW, Enrico, 10405 Berlin (DE)
(74) Vertreter: Richardt Patentanwälte PartG mbB
(86) Internationale Anmeldenummer: PCT/EP2020/056181
(87) Internationale Veröffentlichungsnummer: WO 2020/187622

(56) Entgegenhaltungen:
- US-A1- 2002 062 438
- US-A1- 2013 007 460
- ANONYMOUS: "Validation authority - Wikipedia", 31 August 2017 (2017-08-31), XP055694382, Retrieved from the Internet <URL:https://en.wikipedia.org/w/index.php?title=Validation_authority&oldid=798204314> [retrieved on 20200512]

## Beschreibung

Die Erfindung betrifft ein Verfahren und ein Authentifizierungscomputersystem zum Authentifizieren eines ersten Computersystems gegenüber einem zweiten Computersystem für eine kryptographisch gesicherte Kommunikation zwischen dem ersten und dem zweiten Computersystem.

Bekannte Zertifikate, welche etwa zum Aufbau kryptographisch gesicherter Verbindungen zwischen Computersystemen verwendet werden, beispielsweise unter Verwendung des TLS (Transport Layer Security)- oder SSL (Secure Sockets Layer)-Protokolls, mischen Elemente der Transport- und Anwendungsebene gemäß TCP/IP-Referenzmodell. Dies gilt insbesondere für TLS/SSL-Zertifikate des Typs Organization Validated (OV) oder Extended Validated (EV).

Bei den entsprechenden Zertifikaten handelt es sich beispielsweise um ein X.509-Zertifikat, mit welchem sich ein Server im Zuge des TLS/SSL-Protokolls gegenüber einem Client authentifiziert. Der Client überprüft hierbei neben der Vertrauenswürdigkeit des X.509-Zertifikats, ob der Name des Servers mit einem von dem Zertifikat bestätigten Zertifikatseigentümer, d.h. Servernamen, übereinstimmt. Zusätzlich bestätigt das Zertifikat einen öffentlichen kryptographischen Schlüssel, welcher im Zuge des TLS/SSL-Protokolls beispielsweise zum Aushandeln eines ephemeren symmetrischen Sitzungsschlüssel zur Verschlüsselung der Client-Server-Kommunikation. Durch das Zertifikat wird der öffentliche Schlüssel einer Identität, d.h. dem Sever, zugeordnet.

Die US 2002/062438 A1 beschreibt ein Verfahren zum Verwalten von Vertrauen in einem elektronischen Transaktionssystem, welches eine Zertifizierungsstelle umfasst, die ein Primärzertifikat an einen Empfänger ausstellt und Informationen über das ausgestellte Primärzertifikat an einen Vertrauensserver weiterleitet. Der Vertrauensserver verwaltet die weitergeleiteten Informationen zum ausgestellten Primärzertifikat. Der Empfänger bildet eine Transaktion und stellt die Transaktion dann einer vertrauenden Partei zur Verfügung. Die Transaktion enthält das Primärzertifikat oder eine Referenz darauf. Die vertrauende Partei sendet eine Sicherheitsanforderung an den Vertrauensserver basierend auf der vom Empfänger empfangenen Transaktion. Der Vertrauensserver bestimmt anhand der Informationen zu dem ausgestellten Primärzertifikat und der angeforderten Sicherheit, ob die angeforderte Sicherheit bereitgestellt werden soll. Basierend auf der Feststellung stellt der Vertrauensserver der vertrauenden Partei ein sekundäres Zertifikat aus, das der vertrauenden Partei die Sicherheit bietet.

Die US 2013/007460 A1 beschreibt ein Verfahren zur Bereitstellung von Daten, einschließlich einem Erstellen eines ersten digitalen Zertifikats (Ermächtigungszertifikat), das mit der elektronischen Signatur einer ersten signierenden Entität signiert ist. Das Ermächtigungszertifikat enthält Attribute einer beschriebenen Entität, Informationen, die die erste signierende Entität identifizieren, Angaben zu Daten, die sich auf die beschriebene Entität beziehen, Angaben zu einer Datenquelle und Angaben zu einer vertrauenden Entität, an die die Daten geliefert werden können. Die vertrauende Stelle leitet das Ermächtigungszertifikat an eine Quelle weiter, die die im Ermächtigungszertifikat angegebenen Daten liefert. Die Daten können der vertrauenden Stelle durch ein zweites digitales Zertifikat (benutzerdefiniertes Zertifikat) übermittelt werden, das mit der elektronischen Signatur einer zweiten unterzeichnenden Stelle signiert ist. Benutzerdefinierte Zertifikate können in benutzerdefinierten Zertifikatsperrlisten angezeigt werden.

Der Eintrag "Validation authority" in die Wikipedia vom 31. August 2017 beschreibt Certificate Revocation mittels einer Certificate Revocation List (CRL) durch eine Validation Authoriy (VA) einer Public Key Infrastructure (PKI).

Der Erfindung liegt die Aufgabe zugrunde, ein verbessertes Verfahren zum Authentifizieren eines ersten Computersystems gegenüber einem zweiten Computersystem für eine kryptographisch gesicherte Kommunikation zwischen den beiden Computersystemen zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen betreffen ein Verfahren zum Authentifizieren eines ersten Computersystems gegenüber einem zweiten Computersystem für eine kryptographisch gesicherte Kommunikation zwischen den beiden Computersystemen. Das Verfahren umfasst:
- Bereitstellen einer Authentifizierungsdatei mit Authentifizierungsdaten zum Authentifizieren des ersten Computersystems durch ein drittes Computersystem, wobei die Authentifizierungsdaten über ein Netzwerk abrufbar sind, wobei ein für das erste Computersystem ausgestelltes Zertifikat eine Referenz zum Identifizieren der Authentifizierungsdaten zum Authentifizieren des ersten Computersystems umfasst, wobei die Authentizität und Integrität der entsprechenden Referenz durch die von dem Zertifikat umfasste Zertifikatssignatur gesichert wird,
- Empfangen einer Leseanfrage des zweiten Computersystems zum Lesen der Authentifizierungsdaten durch das dritte Computersystem über das Netzwerk, wobei die Leseanfrage die Authentifizierungsdaten unter Verwendung der Referenz identifiziert,
- in Antwort auf den Empfang der Leseanfrage Senden der angefragten Authentifizierungsdaten zum Authentifizieren des ersten Computersystems von dem dritten Computersystem über das Netzwerk an das zweite Computersystem.

Ausführungsformen können den Vorteil haben, dass Authentifizierungsdaten des zu authentifizierenden Computersystems (ersten Computersystems) insoweit von dem Zertifikat entkoppelt werden, als dass das Zertifikat mittels Zertifikatssignatur zwar eine vertrauenswürdige Quellenangabe in Form der Referenz sichert, von welcher die Authentifizierungsdaten abgerufen werden können, nicht aber den Inhalt der Authentifizierungsdaten. Mithin ermöglichen es Ausführungsformen, dass, solange die Referenz unverändert bleibt, Inhalte des Zertifikats geändert werden, ohne dass dies Änderungen seitens des Authentifizierungscomputersystems (dritten Computersystems) erforderlich macht. Andererseits können Authentifizierungsdaten geändert werden, ohne dass dadurch Änderungen des Zertifikats notwendig werden. Die Authentizität und Integrität der Inhalte des Zertifikats werden durch die Zertifikatssignatur des Zertifikatsausstellers gesichert, während die Authentizität und Integrität der zur Verfügung gestellten Authentifizierungsdaten durch das dritte Computersystem gesichert werden.

Insbesondere verbleiben die Authentifizierungsdaten in der Verfügungshoheit des dritten Computersystems und werden lediglich im konkreten Bedarfsfall auf eine entsprechende Anfrage hin ausgegeben. Dies ermöglicht es Änderungen an den Authentifizierungsdaten direkt in Echtzeit vorzunehmen, ohne das entsprechende Änderungen erst propagiert werden müssen oder Restlaufzeiten von Zertifikaten abgewartet werden müssen.

Bei dem Zertifikat kann es sich um ein End-Entity-Zertifikat bzw. Endzertifikat, ein Intermediate-Zertifikat bzw. Zwischenzertifikat oder ein Root-Zertifikat bzw. Stamm- oder Wurzelzertifikat handeln. Ein Endzertifikat ist ein Zertifikat, welches auf ein weiteres Zertifikat, wie etwa ein Zwischenzertifikat oder Wurzelzertifikat referenziert, während es selbst nicht referenziert wird. Ein Endzertifikat referenziert zum Nachweis der Authentizität und Integrität seiner Authentifizierungsdaten auf ein Zwischenzertifikat oder Wurzelzertifikat mit einem öffentlichen kryptographischen Schlüssel des Ausstellers des Endzertifikats als Signaturprüfschlüssel. Eine entsprechende Referenz auf ein solches Ausstellerzertifikat (Zwischenzertifikat oder Wurzelzertifikat) ist im vorliegenden Fall von dem Zertifikat selbst und oder den durch das Zertifikat referenzierten Authentifizierungsdaten umfasst. Ein Zwischenzertifikat ist ein Zertifikat, welches sowohl auf ein weiteres Zertifikat, wie etwa ein weiteres Zwischenzertifikat oder Wurzelzertifikat referenziert, als auch selbst von einem oder mehreren weiteren Zertifikaten, wie etwa einem Endzertifikat oder einem weiteren Zwischenzertifikat, referenziert wird. Ein Zwischenzertifikat referenziert zum Nachweis der Authentizität und Integrität seiner Authentifizierungsdaten auf ein weiteres Zwischenzertifikat oder Wurzelzertifikat mit einem öffentlichen kryptographischen Schlüssel des Ausstellers des Zwischenzertifikats als Signaturprüfschlüssel. Eine entsprechende Referenz auf ein solches Ausstellerzertifikat (weiteres Zwischenzertifikat oder Wurzelzertifikat) ist im vorliegenden Fall von dem Zertifikat selbst und oder den durch das Zertifikat referenzierten Authentifizierungsdaten umfasst. Ein Wurzelzertifikat ist ein Zertifikat, welches auf kein weiteres Zertifikat referenziert, während es selbst von ein oder mehreren Zertifikaten, wie etwa einem Zwischenzertifikat oder Endzertifikat referenziert wird. Ein solches Wurzelzertifikat wird von dem Aussteller des Wurzelzertifikats für sich selbst ausgestellt ohne Verwendung eines weiteren Zertifikats, d.h. das Wurzelzertifikat umfasst (entweder als Teil des Zertifikats selbst oder als Teil der durch das Wurzelzertifikat referenzierten Authentifizierungsdaten) einen öffentlichen kryptographischen Schlüssel des Ausstellers, dessen Authentizität und Integrität durch das Wurzelzertifikat selbst belegt werden.

Im Falle eines Stamm- oder Wurzelzertifikat bedeutet dies, dass das Zertifikat von dem ersten Computersystem für sich selbst ausgestellt wird. Zudem können auch die Authentifizierungsdaten von dem ersten Computersystem für sich selbst bereitgestellt werden. In diesem Falle ist das erste Computersystem sein eigenes Authentifizierungscomputersystem, d.h. das erste und das dritte Computersystem sind identisch. Alternativ kann es sich im Falle eines von dem ersten Computersystem für sich selbst ausgestellten Wurzelzertifikat bei dem Authentifizierungscomputersystem auch um ein von dem ersten Computersystem unabhängiges Computersystem handeln.

Nach Ausführungsformen kann das Zertifikat allgemein für beliebige Anwendungsfälle, wie beispielsweise einem SSL-Verfahren, zur Signatur und/oder Verschlüsselung von E-Mail, oder als Zertifikat auf einem Chip zum Nachweisen von Authentizität und Integrität des Chips und/oder von dem Chip umfasster Daten dienen. Jedoch sind die möglichen Anwendungsfälle nicht auf diese Beispiele beschränkt.

Nach Ausführungsformen erstellt das Authentifizierungscomputersystem (dritten Computersystem) die bereitgestellten Authentifizierungsdaten und/oder überprüft diese auf ihre Korrektheit hin. Nach weiteren Ausführungsformen empfängt das Authentifizierungscomputersystem die Authentifizierungsdaten vollständig oder zumindest teilweise von einem oder mehreren vierten Computersystemen. Das Authentifizierungscomputersystem prüft diese empfangen Authentifizierungsdaten nicht inhaltlich, sondern leitet diese ausschließlich weiter bzw. stellt diese zur Abfrage für andere (zweite) Computersysteme bereit. Eine Vertrauensstellung im Hinblick auf den Inhalt der bereitgestellten Authentifizierungsdaten wird erreicht, indem das vierte Computersystem als grundsätzlich vertrauenswürdig eingestuft wird. Diese Vertrauenswürdigkeit des vierten Computersystems wird von dem Authentifizierungscomputersystem geprüft und garantiert. Beispielsweise handelt es sich bei dem vierten Computersystem um ein offizielles und/oder staatliches Register, z.B. ein amtliches Register, oder anderweitig öffentlich vertrauenswürdige Partei. Das Authentifizierungscomputersystem garantiert dabei ausschließlich Daten aus solchen vertrauenswürdigen Quellen als Authentifizierungsdaten bereitzustellen. Die von dem vierten Computersystem übermittelten Datensätze identifizieren in diesem Fall beispielsweise selbst ihre eigenen Gültigkeitszeitraum und/oder Gültigkeitsbereich.

Ausführungsformen können den Vorteil haben, dass sie Austauschmechanismen bzw. Änderungsmechanismen unabhängig voneinander sowohl für die Transportebene als auch für die Anwendungsebene ermöglichen. Im Falle bekannter TLS-ZSSL-Zertifikaten sind solche Austauschmechanismen bzw. Änderungsmechanismen sowohl für die Transportebene aufwendig zu implementieren, da diese direkt auch auf die Elemente der Anwendungsebene Auswirkung haben können, beispielsweise im Hinblick auf die Prüfung von Attributen, und umgekehrt.

Solche bekannten Zertifikate dienen als eigenständiger Nachweis sowohl zum Zwecke einer Authentifizierung als auch einer Verschlüsselung. Sie umfassen daher Elemente der Transportverschlüsselung auf Transportebene sowie Informationen zur Identitätsprüfung auf Anwendungsebene, wodurch beide Ebenen miteinander vermischt werden.

Darüber hinaus gehört es zu einem der Grundprinzipien eines Zertifikats, dass von dem Zertifikat umfasste Informationselemente in unveränderlicher Form in das entsprechende Zertifikat integriert sind. Im Allgemeinen wird ein Hashwert über den gesamten Inhalt des Zertifikats berechnet und der resultierende Hashwert mit einem privaten kryptographischen Schlüssel des Zertifikatsausstellers signiert, sodass die Signatur mit einem öffentlichen kryptographischen Schlüssel des Zertifikatsausstellers als Signaturprüfschlüssel auf ihre Authentizität und Integrität hin überprüft werden kann. Jede Änderung in den von dem Zertifikat umfassten Informationselementen macht daher zwingend eine Neuausstellung des Zertifikats notwendig.

Ausführungsformen können den Vorteil haben, dass sie die fixe Bindung zwischen Angaben zur Transportebene und Anwendungsebene auflösen. Dadurch kann eine automatisierte Erneuerung von Einzelelementen zur Absicherung der Transportebene und/oder der Anwendungsebene unabhängig voneinander ermöglicht werden, ohne dass eine Notwendigkeit entsteht automatisch alle Elemente zu erneuern bzw. erneut deren Authentizität und Integrität zu belegen. Darüber hinaus kann durch eine Dynamisierung der Zugriffsfunktionen ein hohes Maß an Flexibilität realisiert werden, um unmittelbar sich ändernde Informationen, wie etwa Registereinträge etc., zur Anwendung zu bringen und beispielsweise einer zertifikatsauswertenden Partei (Relying Party) zu Verfügung zu stellen.

Ausführungsformen stellen ein Zertifikat mit einer Referenz auf eine externe Datenquelle bereit. Dabei wird die Authentizität und Integrität der entsprechenden Referenz durch die Zertifikatssignatur gesichert, im Gegensatz zum Stand der Technik sind aber die eigentlichen anwendungsrelevanten Daten nicht mehr im Zertifikat selbst enthalten. Die anwendungsrelevanten Daten werden vielmehr von einem durch die entsprechende Referenz referenzierten, abgesetzten System bereitgestellt, welches durch den Zertifikatsaussteller, z.B. einen zertifikatsausgebenden Vertrauensdiensteanbieter, betrieben wird. Eine Relying Party, d.h. zertifikatsauswertenden Partei, kann die Referenz aus dem Zertifikat entnehmen und diese durch Signaturprüfung des Zertifikats validieren. Durch Aufruf der Referenz können durch die Relying Party unter Verwendung eines geeigneten technischen Aufrufschemas vertrauenswürdige Attribute, wie zum Beispiel Organisationsdetails des Zertifikatseigentümers, abgerufen werden.

Ausführungsformen können den Vorteil haben, dass sie eine konsequente Trennung von Anwendungs- und Transportebene im Rahmen eines zertifikatsbasierten Vertrauenssystems sicherstellen können. Damit lässt sich beispielsweise eine Ausstellung des Zertifikats zur Absicherung der Kommunikation mit einer validierten Domäne komplett automatisieren, da die hier erforderlichen Prüfschritte alle automatisch erbracht werden können, während die Prüfung von zusätzlichen Attributen, die über eine im Zertifikat hinterlegte Referenz zugänglich gemacht werden können, hiervon technisch wie auch prozessual getrennt erfolgen kann. Damit lässt sich beispielsweise auch die Aktualisierung der eigentlichen Zertifikate automatisieren und in kurzen Zeitintervallen wiederholen, ohne dass damit eine erneute Validierung der verbundenen, unter der Referenz abrufbaren Attribute notwendig wird. Bei dem entsprechenden Zertifikat handelt es sich in diesem Fall um ein domänenvalidiertes Zertifikat (DV-Zertifikat), welches beispielsweise für Transport Layer Security verwendet wird, bei dem der Domänenname eines Antragstellers validiert wird, indem eine gewisse Kontrolle über eine DNS-Domäne nachgewiesen wird. Die Zertifizierungsstelle prüft, ob der eigentliche Auftraggeber auch Inhaber der Domain ist. Die Angaben zum Zertifikatseigentümer können dabei entweder vollständig als referenzierte Authentifizierungsdaten zusätzlich zu dem Zertifikat bereitgestellt werden oder das Zertifikat umfasst beispielsweise den Namen der DNS-Domäne, während weitere Angaben zum Zertifikatseigentümer in die externen Authentifizierungsdaten ausgelagert sind. Durch diese externen Authentifizierungsdaten kann das Zertifikat auch von einem DV-Zertifikat zu einem Organization-Validated-Zertifikat (OV-Zertifikat) oder Extended-Validation-Zertifikat (EV-Zertifikat) aufgewertet werden, wenn die externen Authentifizierungsdaten die entsprechenden hierfür notwendigen zusätzlichen Angaben bereitstellen.

Die Vergabe eines OV-Zertifikats setzt beispielsweise eine Erfüllung der folgenden beiden Kriterien voraus: Nachweisen des Rechts, den betreffenden Domänennamen administrativ zu verwalten, und das tatsächliche Bestehen der Organisation als juristische Person. Ein Zertifikatsausteller veröffentlicht seine OV-Prüfungskriterien beispielsweise in seinen Zertifizierungsrichtlinien. Beispielsweise wird ein Handelsregisterauszug angefordert, Bankdaten werden abgeglichen und/ oder es wird telefonisch Kontakt aufgenommen. Zusätzlich zum Domänennamen wird bei diesem Zertifikatstyp unter Zertifikatseigentümer der Unternehmensname und Unternehmenssitz angeben.

Die Ausstellung eines EV-Zertifikats ist an strengere Vergabekriterien gebunden, welche eine detaillierte Überprüfung des Antragstellers, d.h. des zukünftigen Zertifikatseigentümer, durch die Zertifizierungsstelle erfordern. Die Vergabe eines EV-Zertifikates setzt unter anderem Folgendes voraus: Feststellen der Identität und der Geschäftsadresse des Antragstellers; Sicherstellen, dass der Antragsteller ausschließlicher Eigentümer der Domäne (Domain) ist, für welche das Zertifikat ausgestellt werden soll, oder eine exklusive Nutzungsberechtigung hat; Sicherstellen, dass die antragstellenden Personen befugt sind und dass rechtlich bindende Dokumente von zeichnungsberechtigten Personen unterschrieben werden. Ein Zertifikatsausteller veröffentlicht seine EV-Prüfungskriterien beispielsweise in seinen Zertifizierungsrichtlinien.

Die Authentifizierungsdaten umfassen somit beispielsweise einen Domänennamen, Unternehmensname und/oder Unternehmenssitz.

Nach Ausführungsformen umfassen die Authentifizierungsdaten ein oder mehrere öffentliche kryptographische Schlüssel, welche dem ersten Computersystem zugeordnet sind und deren Authentizität und Integrität durch das Zertifikat belegt werden. Das erste Computersystem umfasst in diesem Fall die ein oder mehreren privaten kryptographische Schlüssel, welche jeweils mit einem der öffentlichen kryptographischen Schlüssel ein asymmetrisches kryptographisches Schlüsselpaar bilden. Beispielsweise erzeugt ein Zertifikatsaussteller mehrere solcher kryptographischen Schlüsselpaare für eine Entität bzw. dem erste Computersystem, welches beispielsweise der entsprechenden Entität zugeordnet ist, und liefert dieser die privaten Schlüssel (beispielsweise physisch, d.h. auf einem gesicherten Datenträger), stellt aber für diese mehreren Schlüsselpaare nur ein einziges Zertifikat mit dieser Entität als Schlüsselinhaber aus. Nach alternativen Ausführungsformen werden die kryptographischen Schlüsselpaare beispielsweise von dem ersten Computersystem, d.h. dem zukünftigen Zertifikatsinhaber bzw. dem der entsprechenden Entität zugeordneten Computersystem, oder einem Bereitsteller des entsprechenden ersten Computersystems erzeugt und/oder verwaltet. Der Zertifikatsaussteller stellt der Entität bzw. dem ersten Computersystem das Zertifikat bereit, welches wiederum eine Referenz auf die Authentifizierungsdaten mit den ein oder mehreren öffentlichen Schlüsseln der ein oder mehreren kryptographischen Schlüsselpaare umfasst. Im Falle einer Erzeugung durch den Bereitsteller werden die kryptographischen Schlüsselpaare beispielsweise im Zuge des Bereitstellens auf dem ersten Computersystem gespeichert. Über die Authentifizierungsdaten kann der Zertifikatsaussteller und/oder das Authentifizierungscomputersystem durch entsprechende Angaben als Bestandteil der Authentifizierungsdaten bestimmen, welche kryptographischen Schlüsselpaare des Schlüsselinhabers wie lange gültig bzw. wann und/oder für welche Zwecke anzuwenden sind, ohne dass das entsprechende Zertifikat innerhalb seines Gültigkeitszeitraums erneuert werden müsste. Insbesondere können auf diese Weise auch zusätzliche kryptographische Schlüsselpaare für dasselbe Zertifikat nachträglich ausgestellt werden, indem die entsprechenden öffentlichen kryptographischen Schlüssel in den Authentifizierungsdaten ggf. mit zusätzlichen Angaben, etwa zur Gültigkeitsdauer und/oder zum Gültigkeitsbereich, ergänzt werden.

Nach Ausführungsformen kann das Zertifikat auch ohne eine validierte Domäne ausgestellt werden. Die zum Zertifikat gehörigen Domäne bzw. gehörigen Domänen werden beispielsweise ebenfalls extern durch den Vertrauensdienstanbieter als Teil der Authentifizierungsdaten verwaltet und können dort beliebig verändert werden. In diesem Fall sind Domäneninformationen zu den zum Zertifikat gehörigen Domänen beispielsweise ebenfalls über die im Zertifikat hinterlegte Referenz als Authentifizierungsdaten zugänglich.

Die konsequente Trennung von Transport- und Anwendungsebene ermöglicht eine höchstmögliche Automatisierung auf Transportebene hinsichtlich Validierung und Ausstellung, während die auf der Anwendungsebene erforderliche Attribute auf getrenntem Wege validiert, eingebracht, aktualisiert und bereitgestellt werden können.

Soll eine kryptographisch gesicherte Verbindung unter Verwendung des TLS/SSL-Protokolls aufgebaut werden, kann der Ablauf beispielsweise wie folgt aussehen: Beim Aufruf einer https geschützten Webseiten wird von dem Server, welcher die Webseite bereitstellt, ein Zertifikat an den Browser des Clients geschickt. Der Client prüft die Signatur des Zertifikats und ruft über eine von dem Zertifikat bereitgestellte Referenz die Authentifizierungsdaten des Servers ab. Die empfangenen Authentifizierungsdaten werden ebenfalls geprüft und gegebenenfalls angezeigt. Mit Hilfe des von dem Zertifikat bereitgestellten öffentlichen Schlüssels des Servers handelt der Browser einen geheimen Sitzungsschlüssel mit dem Server aus. Hierzu wird von dem Client ein Geheimnis generiert (Pre-Master-Secret), welches nur der über den passenden privaten Schlüssel verfügende Server entschlüsseln kann. Wird als Cipher-Suite RSA verwendet, so wird das vom Client generierte Pre-Master-Secret mit diesem öffentlichen Schlüssel des Servers verschlüsselt. Alternativ kann das Diffie-Hellman-Verfahren verwendet werden, um ein gemeinsames Pre-Master-Secret zu generieren. Aus diesem Pre-Master-Secret wird dann ein von Client und Server jeweils ein Master-Secret und aus diesem ein einmaliger Sitzungsschlüssel abgeleitet. Der Sitzungsschlüssel wird von dem Server bestätigt und zur Absicherung der eigentlichen Kommunikation bzw. Datenübertragung genutzt.

Zu Illustrationszwecken sei als Beispiel eine Webseite einer Bank betrachtet, welche mittels Zertifikats geschützt werden soll. Schutzziel sind sowohl eine verschlüsselte Übertragung vertraulicher Daten zwischen Nutzer und Server der Bank, als auch ein Nachweis von vertrauenswürdigen Identitätsdaten sowie anderer anwendungsrelevanter Informationen seitens der Bank. Nach Ausführungsformen verbindet sich der Nutzer mittels einer geeigneten Anwendung (App) oder über einen Browser mit einer von einem Server der Bank über das Internet bereitgestellten Serveranwendung. Dabei wird gemäß des TLS-Protokoll unter Verwendung eines Serverzertifikats der Bank eine verschlüsselte und authentisierte Verbindung zwischen Nutzeranwendung bzw. Browseranwendung und Serveranwendung aufgebaut, sodass die übertragenen Daten hinsichtlich ihrer Integrität und Vertraulichkeit geschützt sind. Die Nutzer-/ bzw. Browseranwendung prüft zudem aber auch, ob sie tatsächlich mit der echten Serveranwendung der Bank kommuniziert. Mit anderen Worten wird die Authentizität der Serveranwendung bzw. des Servers geprüft. Dazu werden erforderliche Attribute über eine von dem Serverzertifikat der Bank enthaltene Referenz abgerufen. Dabei werden sowohl die notwendigen Attribute zur Verfügung gestellt, als auch mittels eines geeigneten Challenge-Response-Protokolls die Authentizität der bereitstellenden Stelle geprüft. Zu diesem Zwecke nutzt das Protokoll geeignete Schlüssel und/oder Zertifikate, welche beispielsweise über eine Vertrauensliste der aufrufenden Serveranwendung integritätsgesichert zur Verfügung gestellt werden.

Das Abrufen der Authentifizierungsdaten mittels der von dem Zertifikat bereitgestellten Referenz kann beispielsweise unter Verwendung von SAMLE, OPENID oder OAuth implementiert werden.

Eine kryptographisch gesicherte Kommunikation zwischen zwei Computersystemen bezeichnet hierbei allgemein ein Übertragen von Daten zwischen den beiden Computersystemen, deren Authentizität und Integrität durch kryptographische Verfahren gesichert ist. Zudem oder alternativ können die Daten durch eine Verschlüsselung gegen unbefugte Zugriffe gesichert sein. So umfasst eine kryptographisch gesicherte Kommunikation nach Ausführungsformen beispielsweise eine von dem ersten Computersystem erzeugte und dem zweiten Computersystem bereitgestellte digitale Signatur, eine unter Verwendung von Netzwerkprotokollen, wie etwa TLS/SSL oder auch IPsec oder SSH, gesicherte Kommunikationsverbindung zwischen den beiden Computersystemen, ein Senden verschlüsselter Nachrichten, z.B. S/MIME oder PGP für E-Mails, oder einer Authentifizierung und Zugriffkontrolle bei Chipkarten.

Digitale Daten können beispielsweise durch eine asymmetrische Verschlüsselung mit einem asymmetrischen Schlüsselpaar, d.h. einem privaten oder einem öffentlichen kryptographischen Schlüssel, oder eine symmetrische Verschlüsselung mit einem symmetrischen kryptographischen Schlüssel kryptographisch gesichert werden. Eine kryptographische Sicherung kann zusätzlich oder alternativ eine Signatur mit einem Signaturschlüssel, z.B. einem privaten kryptographischen Schlüssel eines asymmetrischen Schlüsselpaars, umfassen.

Beispielsweise kann eine kryptographisch gesicherte Übertragung von Daten eine Übertragung über eine verschlüsselte Ende-zu-Ende-Verbindung umfassen. Unter einer verschlüsselten Ende-zu-Ende-Verbindung bzw. einem verschlüsselten Ende-zu-Ende-Übertragungskanal wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch gesichert, um ein Ausspähen und/oder eine Manipulation der Übertragung zu verhindern, wozu ferner ein sogenanntes Secure-Messaging-Verfahren eingesetzt werden kann. Eine Ende-zu-Ende-Verschlüsselung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Unter einem Zertifikat wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich.

Ausführungsformen verwenden modifizierte Zertifikate, welche keine oder lediglich rudimentäre Angaben zum Eigentümer des Zertifikats umfassen, z.B. einen "Distinguished Name" oder einen "Alternative Name", wie etwa eine E-Mail-Adresse oder einen DNS-Eintrag. Die eigentlichen Authentifizierungsdaten zum Authentifizieren und/oder identifizieren des Eigentümers werden extern bereitgestellt und durch eine in dem Zertifikat gespeicherte Referenz identifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, welche die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA oder Vertrauensdiensteanbieter/VDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA /VDA ein Zertifikat in Assoziation mit einem öffentlichen Schlüssel der Allgemeinheit zur Verfügung stellt, ermöglicht der ZDA/VDA den Nutzern asymmetrischer Kryptosysteme den entsprechenden öffentlichen Schlüssel einer Identität, beispielsweise einer Person, einer Organisation oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, welche die Gültigkeit der verwendeten Schlüssel durch Zertifikate bestätigt.

Die Erstellung einer digitalen Signatur, im Folgenden auch lediglich als Signatur bezeichnet, ist ein kryptographisches Verfahren, bei dem zu beliebigen Daten, zum Beispiel einem elektronischen Dokument, ein weiterer Datenwert, welcher als Signatur bezeichnet wird, berechnet wird. Die Signatur kann zum Beispiel ein verschlüsselter Hashwert des elektronischen Dokuments sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Ein Challenge-Response-Protokoll stellt ein sicheres Authentifizierungsverfahren auf Basis gemeinsamen bzw. geteilten Wissens dar. Gemäß dem Challenge-Response-Protokoll schickt beispielsweise ein erster Teilnehmer einer zweiseitigen Kommunikation eine sogenannten Challenge (Aufforderung) an den zweiten Teilnehmer, die dieser lösen muss, um dadurch zu beweisen, dass er über ein bestimmtes Wissen verfügt, ohne dieses Wissen gegenüber Dritten preiszugeben. Nachdem der zweite Teilnehmer die Challenge gelöst hat, antwortet er mit einer Response (Antwort). Beispielsweise sendet der erste Teilnehmer als Challenge eine Zufallszahl N (Nonce) an den zweiten Teilnehmer. Der zweite Teilnehmer ergänzt diese Zufallszahl N um das gemeinsame Geheimnis, wendet eine kryptographische Hashfunktion oder Verschlüsselung auf diese Kombination an und sendet das Ergebnis als Response zurück an den ersten Teilnehmer. Der erste Teilnehmer, der sowohl die Zufallszahl als auch das gemeinsame geteilte Geheimnis und die verwendete Hashfunktion bzw. Verschlüsselung kennt, führt dieselbe Berechnung durch und vergleicht sein Ergebnis mit der Response. Sind das Ergebnis und die Response identisch, so hat sich der zweite Teilnehmer erfolgreich authentifiziert.

Unter einem Computer bzw. Computersystem wird hier ein Gerät verstanden, welches mittels programmierbarer Rechenvorschriften Daten verarbeitet. Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst. Ein Computer bzw. Computersystem kann eine Kommunikationsschnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich um ein stationäres Computersystem, wie beispielsweise einen Personalcomputer (PC) oder einen in einer Client-Server-Umgebung eingebundenen Client bzw. Server handeln. Ferner kann es sich bei einem Computersystem beispielsweise um ein mobiles Telekommunikationsgerät, insbesondere ein Smartphone, einen tragbaren Computer, wie zum Beispiel einen Laptop PC oder Palmtop-PC, ein Tablet PC, einen Personal Digital Assistant oder dergleichen handeln.

Unter einem Speicher werden hier sowohl flüchtige als auch nicht flüchtige elektronische Speicher bzw. digitale Speichermedien verstanden.

Unter einem nichtflüchtigen Speicher wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem flüchtigen elektronischen Speicher wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem geschützten Speicherbereich wird hier ein Bereich eines elektronischen Speichers verstanden, auf den ein Zugriff, das heißt ein Lesezugriff oder ein Schreibzugriff, nur über einen Prozessor des entsprechenden Computersystems möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem Prozessor wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Unter einer Schnittstelle bzw. Kommunikationsschnittstelle wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Kommunikation kann beispielsweise über ein Netzwerk erfolgen. Unter einem Netzwerk wird hier jedes Übertragungsmedium mit einer Anbindung zur Kommunikation verstanden, insbesondere eine lokale Verbindung zwischen zwei oder mehr Computersystemen, ein lokales Netzwerk, insbesondere ein Local Area Network (LAN), ein privates Netzwerk, insbesondere ein Intranet, und ein virtuelles privates Netzwerk (Virtual Private Network - VPN). Ferner kann es sich um ein öffentliches Netzwerk, wie beispielsweise das Internet handeln.

Nach Ausführungsformen umfasst das Zertifikat ferner kryptographischen Parameter zum Aufbau einer kryptographisch gesicherten Verbindung zwischen dem ersten und dem zweiten Computersystem. Ausführungsformen können den Vorteil haben, dass Änderungen der kryptographischen Parameter, wie etwa Schlüssellängen und/oder Verschlüsselungsalgorithmen, unabhängig von den Authentifizierungsdaten ermöglicht werden.

Nach Ausführungsformen umfasst wobei das Zertifikat als kryptographischen Parameter einen dem ersten Computersystem zugeordneten öffentlichen kryptographischen Schlüssel zum Aufbau einer mittels Verschlüsselung kryptographisch gesicherten Verbindung zwischen dem ersten und dem zweiten Computersystem.

Nach Ausführungsformen umfasst die Referenz eine Netzwerkadresse, unter welcher die Authentifizierungsdaten zum Authentifizieren des ersten Computersystems abrufbar sind. Ausführungsformen können den Vorteil haben, dass die Authentifizierungsdaten durch das authentifizierende Computersystem (zweite Computersystem), wenn das Zertifikat vorliegt, direkt unter Verwendung der angegebenen Netzwerkadresse abgerufen werden können. Bei der Referenz kann es sich beispielsweise um einen UUID (Universally Unique Identifier) oder eine IP-Adresse, etwa eine IPv4 oder IPv6, handeln.

Nach Ausführungsformen umfasst die Referenz einen Identifikator, welcher die abzurufenden Authentifizierungsdaten zum Authentifizieren des ersten Computersystems identifiziert. Ausführungsformen können den Vorteil haben, dass anhand der Referenz identifiziert werden kann, welche Authentifizierungsdaten benötigt werden. Beispielsweise ist zu diesem Zwecke die Referenz in der Leseanfrage enthalten.

Nach Ausführungsformen umfasst die Authentifizierungsdatei eine Mehrzahl von Datensätzen mit Authentifizierungsdaten zum Authentifizieren des ersten Computersystems. Die Datensätze sind jeweils unterschiedlichen Sicherheitsstufen für die Authentifizierung des ersten Computersystems zugeordnet. Das dritte Computersystem bestimmt anhand der empfangenen Leseanfrage, welche Sicherheitsstufe für die Authentifizierung des ersten Computersystems zu erfüllen ist und aus welchem der Datensätze die Authentifizierungsdaten in Antwort auf die empfangene Leseanfrage an das zweite Computersystem zu senden sind.

Ausführungsformen können den Vorteil haben, dass das Authentifizierungscomputersystem für unterschiedliche Authentifizierungszwecke unterschiedliche Authentifizierungsdaten bereithält, welche sich beispielsweise hinsichtlich ihres Umfangs, umfasster Detailgenauigkeit und dem ihnen zugrundeliegenden Prüfaufwand bzw. Prüfverfahren voneinander unterscheiden. Ist beispielsweise eine geringere Sicherheitsstufe zu erfüllen können beispielsweise weniger Authentifizierungsdaten, etwa nur ein Servername bzw. Domainname zurückgegeben werden, wodurch die gesamte Prüfung beschleunigt und der Umfang der zu verarbeitenden Daten reduziert werden kann.

Nach Ausführungsformen identifiziert die Referenz die Sicherheitsstufe für die Authentifizierung des ersten Computersystems. Ausführungsformen können den Vorteil haben, dass für ein zu authentifizierendes Computersystem eine Mehrzahl von Zertifikaten ausgestellt werden kann, welche jeweils unterschiedlichen Sicherheitsstufe zugeordnet sind und entsprechend jeweils unterschiedlichen Referenzen umfassen. Dem zu authentifizierendes Computersystem und/oder dem authentifizierenden Computersystem kann es somit ermöglicht werden, bedarfsabhängig eine zu erfüllende Sicherheitsstufe festzulegen und ein dieser Stufe zugeordnetes Zertifikat zu verwenden.

Nach Ausführungsformen werden die Authentifizierungsdaten von dem dritten Computersystem signiert an das zweite Computersystem gesendet. Ausführungsformen können den Vorteil haben, dass durch die Signatur die Authentizität und Integrität der übertragenen Authentifizierungsdaten durch das Authentifizierungscomputersystem in effektiver Weise nachgewiesen werden kann.

Nach Ausführungsformen werden diese Attribute mittels zusätzlicher kryptographischer Schlüssel, sog. Assertion Keys, signiert, welche eine kryptographische Validierung der Authentizität und Integrität der aufgerufenen Attribute ermöglichen. Nach Ausführungsformen erfolgt diese kryptographische Validierung der Authentizität und Integrität unter Verwendung anderer kryptographischer Schlüssel, als den zur Ausgabe des Zertifikats selber benötigten kryptographischer Schlüssel. Zur Absicherung gegen Replay-Attacken findet ein Abruf von Daten unter Verwendung der von dem Zertifikat bereitgestellten Referenz in Verschränkung mit einem Challenge-Response Protokoll statt, sodass ein unberechtigter Angreifer die vertrauenswürdigen Attribute nicht einfach nur kopieren kann.

Nach Ausführungsformen können die erforderlichen Schlüssel und/oder Zertifikate für die unterschiedlichen Prüfungen aus unterschiedlichen Vertrauensquellen, wie zum Beispiel einem Browser Truststore für Daten der Transportebene oder der EU Trusted List für Daten der Anwendungsebene, entnommen werden.

Nach Ausführungsformen werden die Authentifizierungsdaten von dem dritten Computersystem verschlüsselt an das zweite Computersystem gesendet. Ausführungsformen können den Vorteil haben, dass die übertragenen Authentifizierungsdaten effektiv gegenüber unberechtigten Zugriffen geschützt werden können.

Nach Ausführungsformen authentifiziert sich das dritte Computersystem gegenüber dem zweiten Computersystem mittels eines Challenge-Response-Verfahren.

Ausführungsformen können den Vorteil haben, dass eine kryptographisch gesicherte Authentifizierung zwischen dem Authentifizierungscomputersystem und dem authentifizierenden Computersystem implementierte werden kann. Insbesondere ermöglicht ein Challenge-Response-Verfahren durch Verwendung eines Zeitstempels oder eines Wiederholungszählers einen effizienten Schutz gegen Replay-Attacken.

Nach Ausführungsformen umfasst das Verfahren ferner ein Ändern zumindest eines Teils der Authentifizierungsdaten zum Authentifizieren des ersten Computersystems durch das dritte Computersystem, während das für das erste Computersystem ausgestellte Zertifikat in unveränderter Form beibehalten wird. Ausführungsformen können den Vorteil haben, dass die Änderungen der Authentifizierungsdaten unabhängig von Änderungen des Zertifikats implementiert werden können.

Nach Ausführungsformen umfasst das Verfahren ferner ein Ausstellen des Zertifikats mit der Referenz zum Identifizieren der Authentifizierungsdaten zum Authentifizieren des ersten Computersystems durch das dritte Computersystem und ein Erstellen der Authentifizierungsdatei den entsprechenden Authentifizierungsdaten durch das dritte Computersystem zum Abrufen über das Netzwerk. Ausführungsformen können den Vorteil haben, dass das Authentifizierungscomputersystem zugleich als Zertifikatsausteller fungieren kann.

Nach Ausführungsformen umfasst das Zertifikat des ersten Computersystems mit einer beschränkten Gültigkeitsdauer versehen ist und das Verfahren ferner ein Ausstellen eines aktualisierten Nachfolgezertifikats mit einer aktualisierten Gültigkeitsdauer zum Ersetzen, während die Authentifizierungsdatei von dem dritten Computersystem zum Abrufen über das Netzwerk unverändert beibehalten wird. Ausführungsformen können den Vorteil haben, dass Zertifikate mit einer sehr kurzen Gültigkeitsdauer, z.B. ein, zwei, drei Monate, ein, zwei, drei Wochen, ein, zwei, drei Tage oder nur wenige Stunden, ausgestellt werden und in entsprechend hoher Frequenz durch Nachfolgezertifikat aktualisiert werden können, ohne eine Notwendigkeit die Authentifizierungsdaten mit ebenso hoher Frequenz überprüfen zu müssen.

Nach Ausführungsformen umfasst das Verfahren ferner ein Ausstellen eines Ersatzzertifikats mit geänderten kryptographischen Parametern zum Ersetzen des bisherigen Zertifikats des ersten Computersystems, während die Authentifizierungsdatei von dem dritten Computersystem zum Abrufen über das Netzwerk unverändert beibehalten wird. Ausführungsformen können den Vorteil haben, dass das die kryptographischen Parameter geändert werden können, indem ein neues Zertifikat ausgestellt wird, welche das bisherige Zertifikat ersetzt, ohne dass zugleich irgendwelche Aktionen des Authentifizierungscomputersystem im Hinblick auf die Authentifizierungsdaten notwendig wären. Einzige Voraussetzung ist, dass das Ersatzzertifikat dieselbe Referenz aufweist, wie das Zertifikat, welches es ersetzt. Im Zuge der Ersetzung kann das zu ersetzende Zertifikat aktiv gesperrt werden, z. B. indem es auf eine Sperrliste gesetzt wird, von einer Whitelist gestrichen, oder eine entsprechende Änderung der kryptographischen Parametern kann in Kombination mit einer neuen Gültigkeitsdauer implementiert werden, wenn sich die Gültigkeitsdauer des bisherigen Zertifikats ihrem Ende nähert.

Nach Ausführungsformen umfasst das Verfahren ferner ein Sperren der Authentifizierung des ersten Computersystems. Das Sperren der Authentifizierung des ersten Computersystems umfasst ein Ersetzen der Authentifizierungsdaten durch einen über das Netzwerk abrufbaren Sperrhinweis durch das dritte Computersystem. Im Fall einer Sperrung, wird in Antwort auf den Empfang der Leseanfrage von dem dritten Computersystem der Sperrhinweis über das Netzwerk an das zweite Computersystem gesendet. Ausführungsformen können den Vorteil haben, dass sie ein effektives Sperren der Authentifizierung implementieren. Im Fall eines Zertifikats erfolgt eine Sperrung entweder indem das entsprechende Zertifikat auf eine Sperrliste gesetzt wird, von einer Whitelist gestrichen, oder die Gültigkeit des entsprechenden Zertifikats abläuft. Im Falle einer Sperrliste oder einer Whitelist ist es jedoch erforderlich, dass diese zusätzlich zu der Prüfung des Zertifikats selbst abgefragt wird. Erfolgt keine Überprüfung der Sperrliste oder Whitelist, ist es möglich, dass ein Zertifikat trotz Sperrung irrtümlicherweise als gültig anerkannt wird. Das Zertifikat selbst ist aus der Verfügungshoheit des Zertifikatsaussteller, weshalb es nicht direkt gesperrt werden kann. Demgegenüber befinden sich die Authentifizierungsdaten gemäß Ausführungsformen nach wie vor in der Verfügungshoheit des Authentifizierungscomputersystems. Das entsprechende Authentifizierungscomputersystems kann die Authentifizierungsdaten mithin direkt sperren, ohne dass es für das authentifizierende Computersystem im Falle eines Authentifizierungsversuchs eine Möglichkeit vorgesehen ist unabhängig von dem Authentifizierungscomputersystems an die entsprechenden Authentifizierungsdaten zu gelangen. Vielmehr ist das Anfragen des Authentifizierungscomputersystems ein essentieller Bestandteil der Authentifizierung, weshalb zur Sperrprüfung keine zusätzlichen Schritte notwendig sind, bei denen die Gefahr besteht, dass sie weggelassen werden können.

Ausführungsformen betreffen ein Authentifizierungscomputersystem zum Authentifizieren eines ersten Computersystems gegenüber einem zweiten Computersystem für eine kryptographisch gesicherte Kommunikation zwischen dem ersten und dem zweiten Computersystem. Das Authentifizierungscomputersystem umfasst einen Prozessor, Kommunikationsschnittstelle zum Kommunizieren über ein Netzwerk und einen elektronischen Speicher mit maschinenlesbaren Instruktionen. Ein Ausführen der maschinenlesbaren Instruktionen durch den Prozessor verlasst das Authentifizierungscomputersystem dazu, ein Verfahren auszuführen, welches umfasst:
- Bereitstellen einer Authentifizierungsdatei mit Authentifizierungsdaten zum Authentifizieren des ersten Computersystems durch das Authentifizierungscomputersystem, wobei die Authentifizierungsdaten über das Netzwerk abrufbar sind, wobei ein für das erste Computersystem ausgestelltes Zertifikat eine Referenz zum Identifizieren der Authentifizierungsdaten zum Authentifizieren des ersten Computersystems umfasst, wobei die Authentizität und Integrität der entsprechenden Referenz durch die von dem Zertifikat umfasste Zertifikatssignatur gesichert wird,
- Empfangen einer Leseanfrage des zweiten Computersystems zum Lesen der Authentifizierungsdaten durch das Authentifizierungscomputersystem über das Netzwerk, wobei die Leseanfrage die Authentifizierungsdaten unter Verwendung der Referenz identifiziert,
- in Antwort auf den Empfang der Leseanfrage Senden der angefragten Authentifizierungsdaten zum Authentifizieren des ersten Computersystems von dem Authentifizierungscomputersystem über das Netzwerk an das zweite Computersystem.

Nach Ausführungsformen ist das Authentifizierungscomputersystem dazu konfiguriert eine oder mehrere der zuvor genannten Ausführungsformen des Verfahrens zum Authentifizieren des ersten Computersystems gegenüber dem zweiten Computersystem für eine kryptographisch gesicherte Kommunikation zwischen dem ersten und dem zweiten Computersystemen auszuführen.

Der Begriff Authentifizierungscomputersystem bezeichnet hier also ein Computersystem, welches dem zweiten Computersystem Authentifizierungsdaten zum Authentifizieren eines ersten Computersystems bereitstellt. Bei den Authentifizierungsdaten handelt es sich um Daten zur Identität des Eigentümers des Zertifikats, dessen Referenz auf die entsprechenden Authentifizierungsdaten verweist bzw. diese identifiziert. Die Authentizität und Integrität dieser Daten zur Identität des Zertifikatseigentümers bzw. des ersten Computersystems wird dabei von dem dritten Computersystem bestätigt bzw. garantiert.

Im Weiteren werden Ausführungsformen der Erfindung mit Bezugnahme auf die Zeichnungen näher erläutert. Es zeigen:
- Figur 1: ein schematisches Blockdiagramm von Ausführungsformen exemplarischer Computersysteme,
- Figur 2: ein schematisches Blockdiagramm von Ausführungsformen exemplarischer Computersysteme,
- Figuren 3: schematische Blockdiagramme von Ausführungsformen exemplarischer Zertifikate,
- Figur 4: ein Flussdiagramm einer Ausführungsform eines exemplarischen Verfahrens und
- Figur 5: ein Flussdiagramm einer Ausführungsform eines exemplarischen Verfahrens.

Elemente der nachfolgenden Ausführungsformen, die einander entsprechen, werden mit denselben Bezugszeichen gekennzeichnet.

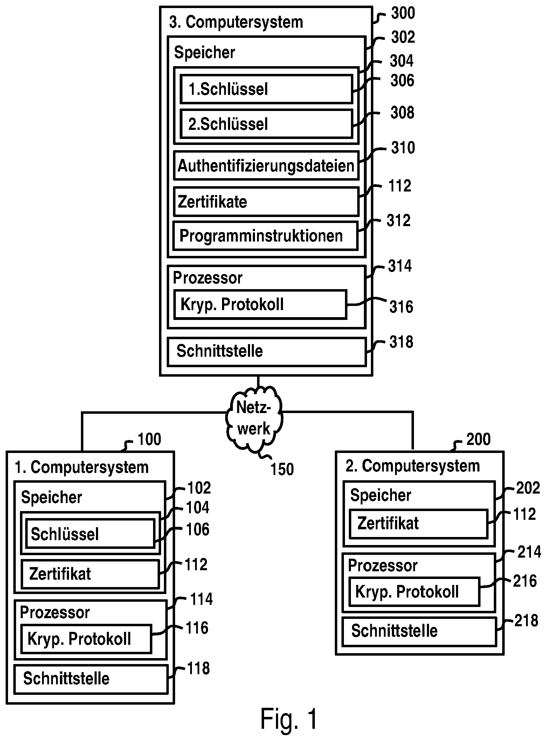

Die Figur 1 zeigt ein erstes und ein zweites Computersystemen 100, 200, zwischen denen eine kryptographisch gesicherte Kommunikation ausgeführt wird. Beispielsweise wird zwischen diesen eine kryptographisch gesicherte Verbindung unter Verwendung des TLS/SSL-Protokolls aufgebaut. Das erste Computersystem 100 umfasst einen Speicher 102 mit einem für das erste Computersystem 100 ausgestellten Zertifikat 112. Ferner umfasst der Speicher 102 beispielsweise einen geschützten Speicherbereich 104, in welchem ein privater kryptographischer Schlüssel 106 des ersten Computersystems 100 gespeichert ist. Der private kryptographische Schlüssel 106 gehört zu einem asymmetrischen Schlüsselpaar, welches dem ersten Computersystems 100 zugeordnet ist und neben dem privaten kryptographischen Schlüssel 106 ferner einen öffentlichen kryptographischen Schlüssel umfasst. Die Zuordnung des öffentlichen kryptographischen Schlüssels zu dem ersten Computersystem 100 wird beispielsweise durch das Zertifikat 112 implementiert, welches den öffentlichen kryptographischen Schlüssel umfasst sowie eine Referenz, welche Authentifizierungsdaten einer Authentifizierungsdatei 310 zum Authentifizieren des ersten Computersystems 100 identifiziert. Die entsprechende Authentifizierungsdatei 310 wird beispielsweise von einem dritten Computersystem 300 bereitgestellt, welches als Authentifizierungscomputersystem dient. Ferner umfasst das erste Computersystem 100 einen Prozessor 114 und eine Kommunikationsschnittstelle 118 zur Kommunikation über das Netzwerk 150, beispielsweise mit dem zweiten und dem dritten Computersystem 200, 300. Der Prozessor 114 führt ein kryptographisches Protokoll 116 zum Aufbau bzw. Ausführen einer kryptographisch gesicherten Kommunikation mit dem zweiten Computersystem 200 aus.

Das zweite Computersystem 200 umfasst einen Speicher 202. In dem Speicher 202 ist beispielsweise das für das erste Computersystem 100 ausgestellte Zertifikat 112 gespeichert, welches das erste Computersystem im Zuge des Aufbaus der kryptographisch gesicherten Kommunikation mit dem ersten Computersystem 100 von diesem empfängt. Ferner umfasst das zweite Computersystem 200 einen Prozessor 214 und eine Kommunikationsschnittstelle 218 zur Kommunikation über das Netzwerk 150, beispielsweise mit dem ersten und dem dritten Computersystem 100, 300. Der Prozessor 214 führt ein kryptographisches Protokoll 216 zum Aufbau bzw. Ausführen der kryptographisch gesicherten Kommunikation mit dem ersten Computersystem 100 aus.

Der Aufbau bzw. das Ausführen der kryptographisch gesicherten Kommunikation zwischen dem ersten Computersystem 100 und dem zweiten Computersystem 200 erfordert eine Authentifizierung des ersten Computersystems 100 gegenüber dem zweiten Computersystem 200. Zu diesem Zweck wird das dritte Computersystem 300 bereitgestellt.

Das Zertifikat 112 umfasst keine oder allenfalls unzureichende Daten zur Authentifizierung des Computersystems 100, welches den Eigentümer des Zertifikats 112 identifizieren. Das Zertifikat 112 umfasst beispielsweise keine Eigentümerinformationen oder allenfalls rudimentäre Eigentümerinformationen, wie etwa einen "Distinguished Name" oder einen "Alternative Name", wie etwa eine E-Mail-Adresse oder einen DNS-Eintrag des ersten Computersystems 100. Authentifizierungsdaten werden vielmehr durch das dritte Computersystem 300 bereitgestellt und durch das Zertifikat 112 mittels einer entsprechenden Referenz identifiziert. Die Authentizität und Integrität der Quellenangabe, d.h. der Referenz, wird durch die Zertifikatssignatur des Zertifikats 112 bestätigt.

Das dritte Computersystem 300 dient als Authentifizierungscomputersystem zum Authentifizieren eines ersten Computersystems 100 gegenüber einem zweiten Computersystem 200 für eine kryptographisch gesicherte Kommunikation zwischen dem ersten und dem zweiten Computersystemen 100, 200. Das dritte Computersystem 300 umfasst einen Speicher 302. Nach Ausführungsformen ist das dritte Computersystem 300 zudem Austeller des Zertifikats 112, d.h. eine zertifizierungsstelle (Certificate Authority/CA). In diesem Fall ist in dem Speicher 302 beispielsweise das von dem dritten Computersystem 300 für das für das erste Computersystem 100 ausgestellte Zertifikat 112 gespeichert. Alternative kann das Zertifikat von einem vierten (nicht gezeigten) Computersystem einer unabhängigen Zertifizierungsstelle ausgestellt werden. In diesem Fall besteht im Allgemeinen keine Notwendigkeit dafür, dass das dritte Computersystem 300 über das Zertifikat 112 verfügt.

Ferner stellt das dritte Computersystem 300 in dem Speicher 302 ein oder mehrere Authentifizierungsdateien 310 mit Authentifizierungsdaten zum Authentifizieren von ein oder mehreren Computersystemen, wie beispielsweise das erste Computersystem 100.

Nach Ausführungsformen umfasst der Speicher 302 zudem beispielsweise einen geschützten Speicherbereich 304, in welchem ein erster und ein zweiter privater kryptographischer Schlüssel 306, 308 des dritten Computersystems 300 gespeichert sind. Die privaten kryptographischen Schlüssel 306, 308 gehört zu zwei asymmetrischen Schlüsselpaaren, welche dem dritten Computersystems 300 zugeordnet sind und neben den privaten kryptographischen Schlüsseln 306, 308 ferner jeweils einen öffentlichen kryptographischen Schlüssel umfassen. Der erste private kryptographische Schlüssel 306 dient beispielsweise als Signaturschlüssel zum Signieren von Zertifikaten, wie dem Zertifikat 112, falls das dritte Computersystems 300 als Zertifizierungsstelle konfiguriert ist. Der dem privaten kryptographischen Schlüssel 306 zugeordnete öffentlichen kryptographischen Schlüssel dient in diesem Fall als Signaturprüfschlüssel zum Prüfen der Authentizität und Integrität der entsprechenden Zertifikate, wie etwa des Zertifikats 112. Der zweite private kryptographische Schlüssel 308 dient beispielsweise als Assertion Key zur Bestätigung der Authentizität und Integrität von Authentifizierungsdaten der Authentifizierungsdateien 310, welche das dritte Computersystem 300 beispielsweise in Antwort auf eine entsprechende Leseanfrage des zweiten Computersystems 200 hin versendet. Beispielsweise können die versendeten Authentifizierungsdaten mit dem privaten kryptographischen Schlüssel 308 signiert und/oder verschlüsselt werden. Der dem privaten kryptographischen Schlüssel 308 zugeordnete öffentlichen kryptographischen Schlüssel dient in diesem Fall als Prüfschlüssel zum Prüfen der der Authentizität und Integrität der versendeten Authentifizierungsdaten.

Des Weiteren umfasst das dritte Computersystem 300 einen Prozessor 314 und eine Kommunikationsschnittstelle 318 zur Kommunikation über das Netzwerk 150, beispielsweise mit dem ersten und dem zweiten Computersystem 100, 200. Der Speicher 302 stellt Programminstruktionen 312 bereit, welche durch den Prozessor 314 ausgeführt werden und das Computersystems 300 dazu veranlassen, ein Verfahren zum Authentifizieren des ersten Computersystems 100 gegenüber dem zweiten Computersystem 200 auszuführen. Das entsprechende Verfahren umfasst ein Senden von Authentifizierungsdaten aus den Authentifizierungsdateien 310 zum Authentifizieren des ersten Computersystems 100 an das zweite Computersystem 200. Im Zuge dieses Verfahren führt der Prozessor 314 ein kryptographisches Protokoll 316 zum kryptographischen Sichern der an das zweite Computersystem 200 gesendeten Authentifizierungsdaten aus. Ferner kann das kryptographisches Protokoll 316 auch zum Signieren von Zertifikaten, wie etwa dem Zertifikat 112, zum Einsatz kommen, falls das dritte Computersystem 300 zugleich als Zertifizierungsstelle zum Ausstellen digitaler Zertifikate dient.

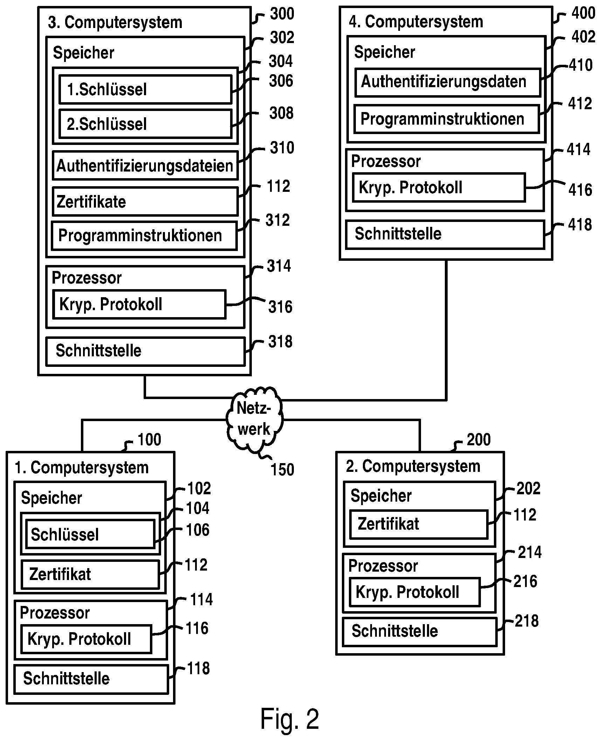

Die Figur 2 zeigt eine Erweiterung der Konfiguration aus Figur 1, welche neben dem ersten, zweiten und dritten Computersystemen 100, 200, 300 aus Figur 1 zusätzlich ein viertes Computersystem 400 umfasst. Das vierte Computersystem 400 stellt dem dritten Computersystem 300 als Authentifizierungscomputersystem Authentifizierungsdaten 410 zum Authentifizieren des ersten Computersystems 100 gegenüber einem zweiten Computersystem 200 bereit. Die bereitgestellten Authentifizierungsdaten 410 entsprechen einem Teil und/oder der vollständigen Authentifizierungsdatei 310 zum Authentifizieren des ersten Computersystems 100. Auf eine Leseanfrage der entsprechenden Authentifizierungsdaten durch das zweite Computersystem 200 leitet das dritte Computersystem 300 die angefragten Authentifizierungsdaten 410 über das Netzwerk 150 an das zweite Computersystem (200) weiter.

Das dritte Computersystem 300 empfängt die Authentifizierungsdaten 410 über das Netzwerk 150 von dem vierten Computersystem 400. Nach Ausführungsformen prüft das dritte Computersystem 300 diese empfangen Authentifizierungsdaten 410 nicht inhaltlich, sondern leitet diese ausschließlich weiter bzw. stellt diese zur Abfrage für das zweite Computersystem 200 bereit. Eine Vertrauensstellung im Hinblick auf den Inhalt der bereitgestellten Authentifizierungsdaten 410 wird erreicht, indem das vierte Computersystem 400 als grundsätzlich vertrauenswürdig eingestuft wird. Diese Vertrauenswürdigkeit des vierten Computersystem 400 wird von dem dritte Computersystem 300 geprüft und garantiert. Mit anderen prüft und garantiert das dritte Computersystem 300, dass die Authentifizierungsdaten 410 aus einer vertrauenswürdigen Quelle stammen, nicht dass diese inhaltlich korrekt sind. Beispielsweise handelt es sich bei dem vierten Computersystem 400 um ein offizielles und/oder staatliches Register, z.B. ein amtliches Register, oder anderweitig öffentlich vertrauenswürdige Partei. Das dritte Computersystem 300 garantiert dabei ausschließlich Daten 410 aus solchen vertrauenswürdigen Quellen als Authentifizierungsdaten der Authentifizierungsdateien 310 bereitzustellen. Die von dem vierten Computersystem 400 übermittelten Datensätze identifizieren in diesem Fall beispielsweise selbst ihre eigenen Gültigkeitszeitraum und/oder ihren Gültigkeitsbereich. Dass die entsprechenden Authentifizierungsdaten 410 tatsächlich von dem vierten Computersystem 400 stammen, kann beispielsweise durch eine Signatur des vierten Computersystem 400 oder einer Übermittlung über einen kryptographisch geschützten Kommunikationskanal sichergestellt werden, bei dessen Aufbau das vierte Computersystem 400 durch das dritte Computersystem 300 authentifiziert wird.

Das vierte Computersystem 400 umfasst einen Speicher 402 mit Authentifizierungsdaten 410 zum Authentifizieren das ersten Computersystems 100 sowie einen Prozessor 414 und eine Kommunikationsschnittstelle 418 zur Kommunikation über das Netzwerk 150 mit dem dritten Computersystem 300. Der Speicher 402 stellt ferner Programminstruktionen 412 bereit, welche durch den Prozessor 414 ausgeführt werden und das Computersystems 400 dazu veranlassen, dem dritten Computersystem 300 Authentifizierungsdaten 410 zum authentifizieren des ersten Computersystems 100 gegenüber dem zweiten Computersystem 200 bereitzustellen. Das entsprechende Verfahren umfasst ein Senden der Authentifizierungsdaten 410 zum Authentifizieren des ersten Computersystems 100 an das dritte Computersystem 300. Das Senden der Authentifizierungsdaten 410 kann beispielswiese in Antwort auf eine Anfrage des dritten Computersystems 300 erfolgen. Alternativ kann das Senden auf eine Aufforderung des ersten Computersystems 100 an das vierte Computersystem zum Bereitstellen der entsprechenden Authentifizierungsdaten für eine Verwendung durch das dritte Computersystem 300 erfolgen. Im Zuge dieses Verfahren führt der Prozessor 414 ein kryptographisches Protokoll 416 kryptographischen Sichern der an das dritte Computersystem 300 gesendeten Authentifizierungsdaten 410 aus.

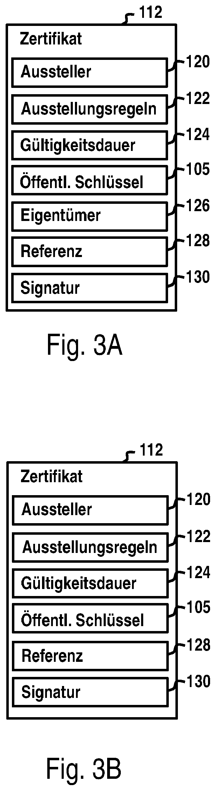

Die Figuren 3A und 3B zeigen zwei exemplarische Ausführungsformen von modifizierten Zertifikaten 112 für eine kryptographisch gesicherte Kommunikation zwischen zwei Computersystemen, etwa durch Aufbau einer kryptographisch gesicherten Verbindung zwischen diesen Computersystemen. Das in Figur 3A gezeigte Zertifikat 112 umfasst die folgenden Informationen: Eine Angabe 120 zu Aussteller des Zertifikats 112, d.h. der Zertifizierungsstelle, welche das Zertifikats 112 signiert hat. Diese Angabe 120 kann beispielsweise ein Name oder eine andere eindeutige Bezeichnung bzw. ein anderer eindeutiger Identifikator sein. Informationen 122 zu Regeln und Verfahren, unter Beachtung derer das Zertifikat 112 ausgegeben wurde, sowie beispielsweise eine Versionsangabe, Seriennummer und/oder Algorithmen-ID. Angaben Gültigkeitsdauer 124 des Zertifikates 112, wie etwa ein Anfangsdatum und ein Enddatum der Gültigkeit. Einen öffentlichen Schlüssel 105, zu dem das Zertifikat 112 Angaben macht bzw. welchen das Zertifikat 112 mit dem Eigentümer des Zertifikats 112 verknüpft. Ferner können Angaben zum zulässigen Anwendungs- und Geltungsbereich des öffentlichen Schlüssels 105 umfasst sein. Rudimentäre Eigentümerinformationen 126, wie etwa einen "Distinguished Name" oder einen "Alternative Name", wie etwa eine E-Mail-Adresse oder einen DNS-Eintrag. Eine Referenz zum Identifizieren von Authentifizierungsdaten zum Authentifizieren des zu authentifizierenden Computersystems, die von dem Authentifizierungscomputersystem bereitgestellt werden. Schließlich umfasst das Zertifikat 112 eine Zertifikatssignatur 130, durch welche die das Zertifikat ausstellende Zertifizierungsstelle die Authentizität sowie Integrität der Angaben 105, 120, 122, 124, 126, 128 des Zertifikats 112 bestätigt. Die digitale Signatur 130 des Ausstellers wird beispielsweise gebildet, indem die Angaben 105, 120, 122, 124, 126, 128 des Zertifikats 112 gehasht und der resultierende Hashwert mit einem privaten Schlüssel der Zertifizierungsstelle verschlüsselt wird.

Die alternative Ausführungsform des Zertifikats 112 wird in Figur 3B gezeigt, welche identisch ist mit der Ausführungsform des Zertifikats 112 in Figur 3A bis auf den Umstand, dass das Zertifikat 112 in Figur 3B außer der Referenz 125 keine Angaben umfasst, anhand derer der Eigentümer des Zertifikats 112 identifiziert bzw. authentifiziert werden könnte. Insbesondere umfasst das Zertifikat 112 in Figur 3B keine Eigentümerangaben 126. Authentifizierungsdaten werden vielmehr ausschließlich durch ein Authentifizierungscomputersystem bereitgestellt.

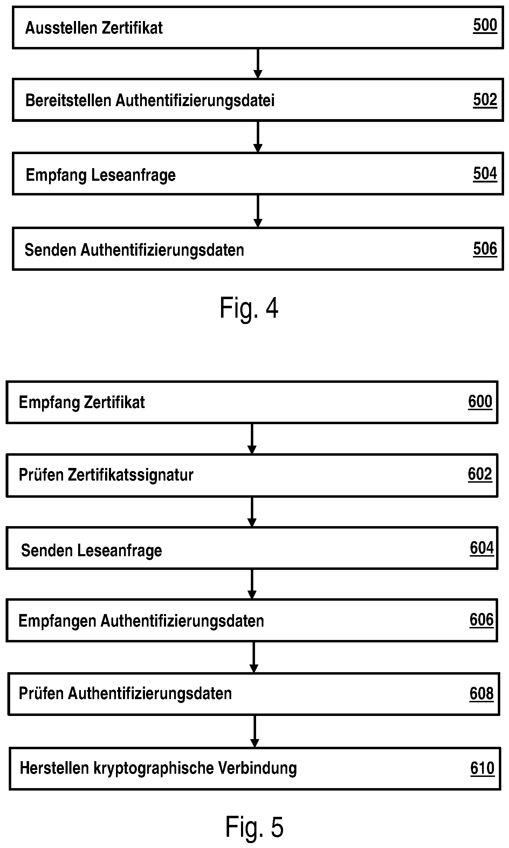

Figur 4 zeigt ein Flussdiagramm einer Ausführungsform eines exemplarischen Verfahrens zum Authentifizieren eines ersten Computersystems gegenüber einem zweiten Computersystem durch ein drittes Computersystem. Beispielsweise wird zwischen dem ersten und dem zweiten Computersystem eine kryptographisch gesicherte Verbindung unter Verwendung des TLS/SSL-Protokolls aufgebaut. In Block 500 stellt das dritte, als Zertifizierungsstelle dienende Computersystem ein Zertifikat für das erste Computersystem aus. Neben kryptographischen Parameter, wie beispielsweise einem öffentlichen kryptographischen Schlüssel, zum Aufbau einer kryptographisch gesicherten Verbindung zwischen dem ersten und dem zweiten Computersystem umfasst das Zertifikat eine Referenz, welche vom dritten Computersystem bereitgestellte Authentifizierungsdaten zum Authentifizieren des ersten Computersystems identifiziert. Durch die Zertifikatssignatur bestätigt die Zertifizierungsstelle die Authentizität und Integrität der von dem Zertifikat bereitgestellten kryptographischen Parameter sowie der von der Referenz identifizierten Quelle für die Authentifizierungsdaten. In Block 502 stellt das dritte, als Authentifizierungscomputersystem dienende Computersystem eine Authentifizierungsdatei mit Authentifizierungsdaten zum Authentifizieren des ersten Computersystems bereit. In Block 504 empfängt das dritte Computersystem über ein Netzwerk eine Leseanfrage des zweiten Computersystems zum Lesen der Authentifizierungsdaten über das Netzwerk. Die Leseanfrage identifiziert die benötigten Authentifizierungsdaten unter Verwendung der Referenz aus dem Zertifikat des ersten Computersystems, welches das zweite Computersystem zuvor empfangen hat. In Block 506 sendet das dritte Computersystem in Antwort auf den Empfang der Leseanfrage in Block 504 die angefragten Authentifizierungsdaten zum Authentifizieren des ersten Computersystems über das Netzwerk an das anfragende zweite Computersystem.

Figur 5 zeigt ein Flussdiagramm einer Ausführungsform des exemplarischen Verfahrens aus Figur 4 aus Sicht des zweiten Computersystems. In Block 600 empfängt das zweite Computersystem von dem ersten Computersystem das Zertifikat des ersten Computersystems. In Block 602 prüft das zweite Computersystem die Zertifikatssignatur des empfangen Zertifikats. Hierzu wird beispielsweise von dem zweiten Computersystem ein Hashwert über den gesamten Inhalt des Zertifikats berechnet und die Zertifikatssignatur mit einem Signaturprüfschlüssel, d.h. einem öffentlichen Schlüssel des der Zertifizierungsstelle, entschlüsselt. Die beiden Resultate werden miteinander verglichen und bei Übereinstimmung wird die Zertifikatssignatur als gültig anerkannt. Mithin ist die Authentizität und Integrität der von dem Zertifikat bereitgestellten Daten bestätigt.

In Block 604 wird von dem zweiten Computersystem unter Verwendung einer von dem Zertifikat umfassten Referenz eine Leseanfrage über das Netzwerk an das dritte Computersystem gesendet. Die Referenz identifiziert die von dem dritten Computersystem benötigten Authentifizierungsdaten zum Authentifizieren des ersten Computersystems. In Block 606 empfängt das zweite Computersystem in Antwort auf das Senden der Leseanfrage in Block 604 die von der Referenz identifizierten Authentifizierungsdaten. In Block 608 prüft das zweite Computersystem die empfangenen Authentifizierungsdaten auf ihre Authentizität und Integrität. Beispielsweise sind die Authentifizierungsdaten mit einem privaten kryptographischen Schlüssel des dritten Computersystems, welcher als Assertion Key dient, signiert und/oder verschlüsselt. Unter Verwendung des zugehörigen öffentlichen kryptographischen Schlüssels des dritten Computersystems kann die Signatur der Authentifizierungsdaten durch das zweite Computersystem geprüft und/oder die Verschlüsselung entschlüsselt werden. In Block 610 wird auf eine erfolgreiche Authentifizierung des ersten Computersystems durch das zweite Computersystem hin die kryptographisch gesicherte Verbindung zwischen dem ersten und dem zweiten Computersystem unter Verwendung der von dem Zertifikat bereitgestellten kryptographischen Parameter, z.B. einem öffentlichen Schlüssel des ersten Computersystems, aufgebaut. Die kryptographisch gesicherte Verbindung wird beispielsweise unter Verwendung des TLS/SSL-Protokolls aufgebaut.

### Bezugszeichenliste

- 100: erstes Computersystem
- 102: Speicher
- 104: geschützter Speicherbereich
- 105: öffentlicher Schlüssel
- 106: privater Schlüssel
- 112: Zertifikat
- 114: Prozessor
- 116: kryptographisches Protokoll
- 118: Kommunikationsschnittstelle
- 120: Zertifikatsaussteller
- 122: Ausstellungsregeln
- 124: Gültigkeitsdauer
- 126: Eigentümer
- 128: Referenz
- 130: Zertifikatssignatur
- 150: Netzwerk
- 200: zweites Computersystem
- 202: Speicher
- 214: Prozessor
- 216: kryptographische Protokoll
- 218: Kommunikationsschnittstelle
- 300: drittes Computersystem
- 302: Speicher
- 304: geschützter Speicherbereich
- 306: privater Schlüssel
- 308: privater Schlüssel
- 310: Authentifizierungsdateien
- 312: Programminstruktionen
- 314: Prozessor
- 316: kryptographisches Protokoll
- 318: Kommunikationsschnittstelle
- 400: viertes Computersystem
- 402: Speicher
- 410: Authentifizierungsdaten
- 412: Programminstruktionen
- 414: Prozessor
- 416: kryptographisches Protokoll
- 418: Kommunikationsschnittstelle

## Patentansprüche

1. Verfahren zum Authentifizieren eines ersten Computersystems (100) gegenüber einem zweiten Computersystem (200) für eine kryptographisch gesicherte Kommunikation zwischen den beiden Computersystemen (100, 200), wobei das Verfahren umfasst:
• Bereitstellen einer Authentifizierungsdatei mit Authentifizierungsdaten zum Authentifizieren des ersten Computersystems (100), wobei das Bereitstellen durch ein drittes Computersystem (300) erfolgt, von welchem die Authentifizierungsdaten über ein Netzwerk (150) abrufbar sind, wobei ein für das erste Computersystem (100) ausgestelltes Zertifikat (112) eine Referenz (128) zum Identifizieren der Authentifizierungsdaten zum Authentifizieren des ersten Computersystems (100) umfasst, wobei die Authentizität und Integrität der entsprechenden Referenz (128) durch die von dem Zertifikat (112) umfasste Zertifikatssignatur (130) gesichert werden, und wobei die Authentifizierungsdaten Angaben zu einem Zertifikatseigentümer des Zertifikats (112) beinhalten,
• Empfangen einer Leseanfrage des zweiten Computersystems (200) zum Lesen der Authentifizierungsdaten durch das dritte Computersystem (300) über das Netzwerk (150), wobei die Leseanfrage die Authentifizierungsdaten unter Verwendung der Referenz (128) identifiziert,
• in Antwort auf den Empfang der Leseanfrage Senden der angefragten Authentifizierungsdaten zum Authentifizieren des ersten Computersystems (100) von dem dritten Computersystem (300) über das Netzwerk (150) an das zweite Computersystem (200),
wobei das Zertifikat (112) ferner einen kryptographischen Parameter zum Aufbau einer kryptographisch gesicherten Verbindung zwischen dem ersten und dem zweiten Computersystem (100, 200) umfasst,
wobei das Verfahren ferner ein Ausstellen eines Ersatzzertifikats mit geänderten kryptographischen Parametern zum Ersetzen des bisherigen Zertifikats (112) des ersten Computersystems (100) umfasst, während die Authentifizierungsdatei von dem dritten Computersystem (300) zum Abrufen über das Netzwerk (150) unverändert beibehalten wird.

2. Verfahren nach Anspruch 1, wobei das Zertifikat (112) als kryptographischen Parameter einen dem ersten Computersystem (100) zugeordneten öffentlichen kryptographischen Schlüssel (105) zum Aufbau einer mittels Verschlüsselung kryptographisch gesicherten Verbindung zwischen dem ersten und dem zweiten Computersystem (200) umfasst.

3. Verfahren nach einem der vorangehenden Ansprüche, wobei die Referenz (128) eine Netzwerkadresse umfasst, unter welcher die Authentifizierungsdaten zum Authentifizieren des ersten Computersystems (100) abrufbar sind, und/oder einen Identifikator, welcher die abzurufenden Authentifizierungsdaten zum Authentifizieren des ersten Computersystems (100) identifiziert.

4. Verfahren nach einem der vorangehenden Ansprüche, wobei die Authentifizierungsdatei eine Mehrzahl von Datensätzen mit Authentifizierungsdaten zum Authentifizieren des ersten Computersystems (100) umfasst, wobei die Datensätze jeweils unterschiedlichen Sicherheitsstufen für die Authentifizierung des ersten Computersystems (100) zugeordnet sind, wobei das dritte Computersystem (300) anhand der empfangenen Leseanfrage bestimmt, welche Sicherheitsstufe für die Authentifizierung des ersten Computersystems (100) zu erfüllen ist und aus welchem der Datensätze die Authentifizierungsdaten in Antwort auf die empfangene Leseanfrage an das zweite Computersystem (200) zu senden sind.

5. Verfahren nach Anspruch 4, wobei die Referenz (128) die Sicherheitsstufe für die Authentifizierung des ersten Computersystems (100) identifiziert.

6. Verfahren nach einem der vorangehenden Ansprüche, wobei die Authentifizierungsdaten von dem dritten Computersystem (300) signiert an das zweite Computersystem (200) gesendet werden.

7. Verfahren nach einem der vorangehenden Ansprüche, wobei die Authentifizierungsdaten von dem dritten Computersystem (300) verschlüsselt an das zweite Computersystem (200) gesendet werden.

8. Verfahren nach einem der vorangehenden Ansprüche, wobei sich das dritte Computersystem (300) gegenüber dem zweiten Computersystem (200) mittels eines Challenge-Response-Verfahren authentifiziert.

9. Verfahren nach einem der vorangehenden Ansprüche, wobei das Verfahren ferner ein Ändern zumindest eines Teils der Authentifizierungsdaten zum Authentifizieren des ersten Computersystems (100) durch das dritte Computersystem (300) umfasst, während das für das erste Computersystem (100) ausgestellte Zertifikat (112) in unveränderter Form beibehalten wird.

10. Verfahren nach einem der vorangehenden Ansprüche, wobei das Verfahren ferner durch das dritte Computersystem (300) ein Ausstellen des Zertifikats (112) mit der Referenz (128) zum Identifizieren der Authentifizierungsdaten zum Authentifizieren des ersten Computersystems (100) und ein Erstellen der Authentifizierungsdatei mit den entsprechenden Authentifizierungsdaten zum Abrufen über das Netzwerk (150) umfasst.

11. Verfahren nach einem der vorangehenden Ansprüche, wobei das Zertifikat (112) des ersten Computersystems (100) mit einer beschränkten Gültigkeitsdauer (124) versehen ist und das Verfahren ferner ein Ausstellen eines aktualisierten Nachfolgezertifikats mit einer aktualisierten Gültigkeitsdauer zum Ersetzen umfasst, während die Authentifizierungsdatei von dem dritten Computersystem (300) zum Abrufen über das Netzwerk (150) unverändert beibehalten wird.

12. Verfahren nach einem der vorangehenden Ansprüche, wobei das Verfahren ferner ein Sperren der Authentifizierung des ersten Computersystems (100) umfasst, wobei das Sperren der Authentifizierung des ersten Computersystems (100) ein Ersetzen der Authentifizierungsdaten durch einen über das Netzwerk (150) abrufbaren Sperrhinweis durch das dritte Computersystem (300) umfasst und wobei, im Fall einer Sperrung, in Antwort auf den Empfang der Leseanfrage von dem dritten Computersystem (300) der Sperrhinweis über das Netzwerk (150) an das zweite Computersystem (200) gesendet wird.

13. Authentifizierungscomputersystem (300) zum Authentifizieren eines ersten Computersystems (100) gegenüber einem zweiten Computersystem (200) für eine kryptographisch gesicherte Kommunikation zwischen dem ersten und dem zweiten Computersystemen (100, 200), wobei das Authentifizierungscomputersystem (300) einen Prozessor (314), Kommunikationsschnittstelle (318) zum Kommunizieren über ein Netzwerk (150) und einen elektronischen Speicher (302) mit maschinenlesbaren Instruktionen (312) umfasst, wobei ein Ausführen der maschinenlesbaren Instruktionen (312) durch den Prozessor (314) das Authentifizierungscomputersystem (300) dazu veranlasst, ein Verfahren auszuführen, welches umfasst:
• Bereitstellen einer Authentifizierungsdatei (310) mit Authentifizierungsdaten zum Authentifizieren des ersten Computersystems (100) durch das Authentifizierungscomputersystem (300), wobei die Authentifizierungsdaten über das Netzwerk (150) abrufbar sind, wobei ein für das erste Computersystem (100) ausgestelltes Zertifikat (112) eine Referenz (128) zum Identifizieren der Authentifizierungsdaten zum Authentifizieren des ersten Computersystems (100) umfasst, wobei die Authentizität und Integrität der entsprechenden Referenz (128) durch die von dem Zertifikat (112) umfasste Zertifikatssignatur (130) gesichert werden, und wobei die Authentifizierungsdaten Angaben zu einem Zertifikatseigentümer des Zertifikats (112) beinhalten,
• Empfangen einer Leseanfrage des zweiten Computersystems (200) zum Lesen der Authentifizierungsdaten durch das Authentifizierungscomputersystem (300) über das Netzwerk (150), wobei die Leseanfrage die Authentifizierungsdaten unter Verwendung der Referenz (128) identifiziert,
• in Antwort auf den Empfang der Leseanfrage Senden der angefragten Authentifizierungsdaten zum Authentifizieren des ersten Computersystems (100) von dem Authentifizierungscomputersystem (300) über das Netzwerk (150) an das zweite Computersystem (200).
wobei das Zertifikat (112) ferner einen kryptographischen Parameter zum Aufbau einer kryptographisch gesicherten Verbindung zwischen dem ersten und dem zweiten Computersystem (100, 200) umfasst,
wobei das Verfahren ferner ein Ausstellen eines Ersatzzertifikats mit geänderten kryptographischen Parametern zum Ersetzen des bisherigen Zertifikats (112) des ersten Computersystems (100) umfasst, während die Authentifizierungsdatei von dem dritten Computersystem (300) zum Abrufen über das Netzwerk (150) unverändert beibehalten wird.

## Claims

1. A method for authenticating a first computer system (100) to a second computer system (200) for cryptographically secured communication between the two computer systems (100, 200), wherein the method comprises:
• providing an authentication file containing authentication data for authentication of the first computer system (100), wherein the authentication file is provided by a third computer system (300), from which the authentication data are retrievable via a network (150), wherein a certificate (112) issued for the first computer system (100) comprises a reference (128) for identifying the authentication data for authentication of the first computer system (100), wherein the authenticity and integrity of the corresponding reference (128) are secured by the certificate signature (130) comprised by the certificate (112), and wherein the authentication data contain details relating to the holder of the certificate (112),
• receiving, by the third computer system (300) via the network (150), a read request from the second computer system (200) for reading the authentication data, wherein the read request identifies the authentication data by using the reference (128),
• in response to the receipt of the read request, sending the requested authentication data to the second computer system (200) by the third computer system (300) via the network (150) for authentication of the first computer system (100),
wherein the certificate (112) further comprises a cryptographic parameter for establishing a cryptographically secured connection between the first and the second computer system (100, 200),
wherein the method further comprises issuing a replacement certificate with altered cryptographic parameters for replacing the previous certificate (112) of the first computer system (100), whilst the authentication file is retained, unaltered, by the third computer system (300) for retrieval via the network (150).

2. The method according to claim 1, wherein the certificate (112), as cryptographic parameter, comprises a public cryptographic key (105) associated with the first computer system (100) for establishing a connection, cryptographically secured by means of encryption, between the first and the second computer system (200).

3. The method according to any one of the preceding claims, wherein the reference (128) comprises a network address under which the authentication data for authentication of the first computer system (100) are retrievable, and/or an identifier which identifies the authentication data to be retrieved for authentication of the first computer system (100).

4. The method according to any one of the preceding claims, wherein the authentication file comprises a plurality of datasets containing authentication data for authentication of the first computer system (100), wherein the datasets are each associated with different security stages for the authentication of the first computer system (100), wherein the third computer system (300), on the basis of the received read request, determines which security stage is to be satisfied for the authentication of the first computer system (100) and from which of the datasets the authentication data are to be sent to the second computer system (200) in response to the received read request.

5. The method according to claim 4, wherein the reference (128) identifies the security stage for the authentication of the first computer system (100).

6. The method according to any one of the preceding claims, wherein the authentication data are sent from the third computer system (300), signed, to the second computer system (200).

7. The method according to any one of the preceding claims, wherein the authentication data are sent from the third computer system (300), encrypted, to the second computer system (200).

8. The method according to any one of the preceding claims, wherein the third computer system (300) authenticates itself to the second computer system (200) by means of a challenge-response method.

9. The method according to any one of the preceding claims, wherein the method further comprises altering at least part of the authentication data for authentication of the first computer system (100) by the third computer system (300), whilst the certificate (112) issued for the first computer system (100) is retained in unaltered form.

10. The method according to any one of the preceding claims, wherein the method further comprises, by the third computer system (300), issuing the certificate (112) with the reference (128) for identifying the authentication data for authentication of the first computer system (100) and issuing the authentication file containing the corresponding authentication data for retrieval via the network (150).

11. The method according to any one of the preceding claims, wherein the certificate (112) of the first computer system (100) is provided with a limited duration of validity (124) and the method further comprises issuing an updated successor certificate with an updated duration of validity for replacement, whilst the authentication file is retained, unaltered, by the third computer system (300) for retrieval via the network (150).

12. The method according to any one of the preceding claims, wherein the method further comprises a blocking of the authentication of the first computer system (100), wherein the blocking of the authentication of the first computer system (100) comprises a replacement, by the third computer system (300), of the authentication data by a blocking instruction retrievable via the network (150), and wherein, in the event of blocking, in response to the receipt of the read request from the third computer system (300), the blocking instruction is sent via the network (150) to the second computer system (200).

13. An authentication computer system (300) for authentication of a first computer system (100) to a second computer system (200) for cryptographically secured communication between the first and the second computer systems (100, 200), wherein the authentication computer system (300) comprises a processor (314), communication interface (318) for communication via a network (150), and an electronic memory (302) containing machine-readable instructions (312), wherein execution of the machine-readable instructions (312) by the processor (314) prompts the authentication computer system (300) to carry out a method which comprises:
• providing an authentication file (310) containing authentication data for authentication of the first computer system (100) by the authentication computer system (300), wherein the authentication data are retrievable via the network (150), wherein a certificate (112) issued for the first computer system (100) comprises a reference (128) for identifying the authentication data for authentication of the first computer system (100), wherein the authenticity and integrity of the corresponding reference (128) are secured by the certificate signature (130) comprised by the certificate (112), and wherein the authentication data contain details relating to the holder of the certificate (112),
• receiving, by the authentication computer system (300) via the network (150), a read request from the second computer system (200) for reading the authentication data, wherein the read request identifies the authentication data by using the reference (128),
• in response to the receipt of the read request, sending the requested authentication data to the second computer system (200) by the authentication computer system (300) via the network (150) for authentication of the first computer system (100),
wherein the certificate (112) further comprises a cryptographic parameter for establishing a cryptographically secured connection between the first and the second computer system (100, 200),
wherein the method further comprises issuing a replacement certificate with altered cryptographic parameters for replacing the previous certificate (112) of the first computer system (100), whilst the authentication file is retained, unaltered, by the third computer system (300) for retrieval via the network (150).

## Revendications

1. Procédé d'authentification d'un premier système informatique (100) vis-à-vis d'un deuxième système informatique (200) pour une communication sécurisée par cryptographie entre les deux systèmes informatiques (100, 200), le procédé comprenant :
• la fourniture d'un fichier d'authentification avec des données d'authentification permettant l'authentification du premier système informatique (100), où la fourniture a lieu par un troisième système informatique (300) à partir duquel les données d'authentification peuvent être récupérées par le biais d'un réseau (150), où un certificat (112) établi pour le premier système informatique (100) comprend une référence (128) permettant l'identification des données d'authentification permettant l'authentification du premier système informatique (100), où l'authenticité et l'intégrité de la référence (128) correspondante sont assurées par la signature de certificat (130) comprise par le certificat (112) et où les données d'authentification contiennent des indications concernant un propriétaire de certificat du certificat (112),
• la réception d'une demande de lecture du deuxième système informatique (200) permettant la lecture des données d'authentification par le troisième système informatique (300) par le biais du réseau (150), où la demande de lecture identifie les données d'authentification moyennant l'emploi de la référence (128),
• en réponse à la réception de la demande de lecture, l'envoi des données d'authentification demandées permettant l'authentification du premier système informatique (100) à partir du troisième système informatique (300) vers le deuxième système informatique (200) par le biais du réseau (150),
dans lequel le certificat (112) comprend en outre un paramètre cryptographique permettant la création d'une liaison sécurisée par cryptographie entre le premier et le deuxième système informatique (100, 200),
le procédé comprenant en outre une délivrance d'un certificat de remplacement avec des paramètres cryptographiques modifiés permettant le remplacement du certificat (112) existant du premier système informatique (100), tandis que le ficher d'authentification est conservé inchangé par le troisième système informatique (300) pour la récupération par le bais du réseau (150).

2. Procédé selon la revendication 1, dans lequel le certificat (112) comprend en tant que paramètre cryptographique une clé cryptographique publique (105) associée au premier système informatique (100) permettant la création d'une liaison sécurisée par cryptographie au moyen d'un chiffrement entre le premier et le deuxième système informatique (200).

3. Procédé selon l'une des revendications précédentes, dans lequel la référence (128) comprend une adresse de réseau sous laquelle les données d'authentification permettant l'authentification du premier système informatique (100) peuvent être récupérées, et/ou un identificateur, lequel identifie les données d'authentification à récupérer permettant l'authentification du premier système informatique (100).

4. Procédé selon l'une des revendications précédentes, dans lequel le fichier d'authentification comprend une multiplicité d'ensembles de données avec des données d'authentification permettant l'authentification du premier système informatique (100), où les ensembles de données sont respectivement associés à des niveaux de sécurité différents pour l'authentification du premier système informatique (100), où le troisième système informatique (300) détermine à l'aide de la demande de lecture reçue quel niveau de sécurité est à satisfaire pour l'authentification du premier système informatique (100) et à partir duquel parmi les ensembles de données les données d'authentification sont à envoyer au deuxième système informatique (200) en réponse à la demande de lecture reçue.

5. Procédé selon la revendication 4, dans lequel la référence (128) identifie le niveau de sécurité pour l'identification du premier système informatique (100).

6. Procédé selon l'une des revendications précédentes, dans lequel les données d'authentification sont envoyées signées par le troisième système informatique (300) vers le deuxième système informatique (200).

7. Procédé selon l'une des revendications précédentes, dans lequel les données d'authentification sont envoyées chiffrées par le troisième système informatique (300) vers le deuxième système informatique (200).

8. Procédé selon l'une des revendications précédentes, dans lequel le troisième système informatique (300) s'authentifie vis-à-vis du deuxième système informatique (200) au moyen d'un procédé de défi-réponse.

9. Procédé selon l'une des revendications précédentes, le procédé comprenant en outre une modification d'au moins une partie des données d'authentification permettant l'authentification du premier système informatique (100) par le troisième système informatique (300), tandis que le certificat (112) émis pour le premier système informatique (100) reste conservé sous forme inchangée.

10. Procédé selon l'une des revendications précédentes, le procédé comprenant en outre une délivrance, par le troisième système informatique (300), du certificat (112) avec la référence (128) permettant l'identification des données d'authentification pour l'authentification du premier système informatique (100) et une création du fichier d'authentification avec les données d'authentification correspondantes pour la récupération par le biais du réseau (150).

11. Procédé selon l'une des revendications précédentes, dans lequel le certificat (112) du premier système informatique (100) est pourvu d'une durée de validité (124) restreinte et le procédé comprend en outre une délivrance d'un certificat de suivi actualisé avec une durée de validité actualisée pour le remplacement tandis que le fichier d'authentification reste conservé inchangé par le troisième système informatique (300) pour la récupération par le biais du réseau (150).

12. Procédé selon l'une des revendications précédentes, le procédé comprenant en outre un blocage de l'authentification du premier système informatique (100), où le blocage de l'authentification du premier système informatique (100) comprend un remplacement des données d'authentification par un avis de blocage récupérable par le biais du réseau (150) par le troisième système informatique (300), et où, dans le cas d'un blocage, en réponse à la réception de la demande de lecture par le troisième système informatique (300), l'avis de blocage est envoyé au deuxième système informatique (200) par le biais du réseau (150).

13. Système informatique d'authentification (300) permettant l'authentification d'un premier système informatique (100) vis-à-vis d'un deuxième système informatique (200) pour une communication sécurisée par cryptographie entre les premier et deuxième systèmes informatiques (100, 200), le système informatique d'authentification (300) comprenant un processeur (314), une interface de communication (318) permettant de communiquer par le biais d'un réseau (150) et une mémoire électronique (302) pourvue d'instructions (312) lisibles par machine, dans lequel une exécution des instructions (312) lisibles par machine par le processeur (314) fait en sorte que le système informatique d'authentification (300) exécute un procédé, lequel comprend :
• la fourniture d'un fichier d'authentification (310) avec des données d'authentification permettant l'authentification du premier système informatique (100) par le système informatique d'authentification (300), où les données d'authentification peuvent être récupérées par le biais d'un réseau (150), où un certificat (112) établi pour le premier système informatique (100) comprend une référence (128) permettant l'identification des données d'authentification permettant l'authentification du premier système informatique (100), où l'authenticité et l'intégrité de la référence (128) correspondante sont assurées par la signature de certificat (130) comprise par le certificat (112) et où les données d'authentification contiennent des indications concernant un propriétaire de certificat du certificat (112),
• la réception d'une demande de lecture du deuxième système informatique (200) pour la lecture des données d'authentification par le système informatique d'authentification (300) par le biais du réseau (150), où la demande de lecture identifie les données d'authentification moyennant l'emploi de la référence (128),
• en réponse à la réception de la demande de lecture, l'envoi des données d'authentification demandées permettant l'authentification du premier système informatique (100) à partir du système informatique d'authentification (300) vers le deuxième système informatique (200) par le biais du réseau (150),
dans lequel le certificat (112) comprend en outre un paramètre cryptographique permettant la création d'une liaison sécurisée par cryptographie entre le premier et le deuxième système informatique (100, 200),
dans lequel le procédé comprend en outre une diffusion d'un certificat de remplacement avec des paramètres cryptographiques modifiés pour le remplacement du certificat (112) existant du premier système informatique (100), tandis que le ficher d'authentification est conservé inchangé par le troisième système informatique (300) pour la récupération par le bais du réseau (150).
